# EUROPÄISCHE PATENTSCHRIFT

(11) **EP 0 882 623 B1**
(45) Veröffentlichungstag und Bekanntmachung des Hinweises auf die Patenterteilung: **13.06.2001**
(21) Anmeldenummer: 98101349.3
(22) Anmeldetag: 27.01.1998
(51) Int. Cl.: B60R 13/08

(54) **Hitzeschild**
Thermal shield
Ecran thermique

(30) Priorität: 06.06.1997 DE 19723943
(43) Veröffentlichungstag der Anmeldung: 09.12.1998
(73) Patentinhaber: Federal-Mogul Sealing Systems GmbH, 57562 Herdorf (DE)
(72) Erfinder: Schmitt, Klaus, Dipl.-Ing., 57520 Grünebach (DE)

(56) Entgegenhaltungen:
- EP-A- 0 751 044
- EP-A- 0 806 555
- CH-A- 672 828
- DE-U- 9 211 921

## Beschreibung

Die Erfindung betrifft ein Hitzeschild zur Abschirmung von thermisch empfindlichen Bauteilen, insbesondere bei Kraftfahrzeugen, bestehend aus zwei metallischen Grundplatten, die am Randbereich miteinander verbunden sind und die außerhalb des Randbereiches zwischen ihren einander zugewandten Oberflächen einen definierten Spalt aufweisen.

Im Automobilbau ist es aufgrund der immer kompakteren und leichteren Bauweise und gleichzeitiger Verbesserung des thermodynamischen Wirkungsgrades der Motoren nötig, verschiedene Motorenteile oder Baugruppen vor starker Wärmebelastung zu schützen.

Neben der Abschirmung der Bauteile ist es aber auch notwendig, bei der Abführung der Wärme den Fahrgastraum nicht unnötig aufzuheizen.

Naturgemäß sind Wärmeführungsprobleme von Kraftfahrzeugtyp zu Kraftfahrzeugtyp unterschiedlich. Sie werden beeinflußt von vielen Faktoren wie Leistung, Konstruktion des Motors oder Anordnung der Teile im Motorraum. Die optimale Konstruktion der Hitzeschilder ist deshalb auch abhängig vom Einsatzort.

Aus der DE OS 40 36 261 sind Hitzeschilder zu entnehmen, welche aus einer metallischen Grundplatte bestehen, deren Seitenflächen unter Bildung einer Schale abgebogen sind. In diese Schale ist eine Isolierplatte aus einem Keramikvlies eingelegt.

Auf diese Isolierplatte ist eine weitere Blechplatte gelegt und zur Befestigung der Platten untereinander werden die aufgebogenen Seitenflächen der Grundplatten umgebogen.

Die Wärmeabschirmung erfolgt so mit Hilfe eines separaten Isoliermaterials. Eine kostengünstigere Konstruktion ist aus der DE 38 34 054 C2 zu entnehmen, von der die Erfindung ausgeht. Zwei metallische Grundplatten sind am Randbereich miteinander verbunden. Mittels der zwischen den Grundplatten vorhandenen Luftschicht wird eine Wärmeisolation erzeugt. Die Grundplatten sind gegebenenfalls mit einer Falzung durch Nieten oder durch eine Schweißverbindung miteinander verbunden und weisen eventuell eine strahlungsreflektierende Beschichung z.B. in Form einer Aluminium-Plattierung auf

Der Erfindung liegt die Aufgabe zugrunde, ein gattungsgemäßes Hitzeschild im konstruktiven Aufbau und in der Herstellung zu vereinfachen, um so die Herstellungskosten zu senken.

Diese Aufgabe wird erfindungsgemäß durch die kennzeichnenden Merkmale des Patentanspruch 1 gelöst.

Vorteilhafte Ausgestaltungen der Erfindung sind in den Unteransprüchen dokumentiert.

Auf diese Weise ist es möglich, das Hitzeschild dem Motor konstruktiv gezielt anzupassen, indem partiell Hohlräume bzw. Luftkammern erzeugt werden. Je nach Anwendungsfall ist es so möglich, die Luftkammern unterschiedlich groß oder in einer bestimmten Topographie auszuführen.

Die Erfidung ist anhand eines Ausführungsbeispieles in der Zeichnung dargestellt und wird im folgenden näher erläutert.

Es zeigen:
- Figur 1: Draufsicht eines erfindungsgemäßen Hitzeschildes mit Abgasrohrdichtung
- Figur 2: Materialien zur Bildung des Hitzeschildes
- Figur 3: Hitzeschild gemäß Schnittlinie III-III der Fig. 1

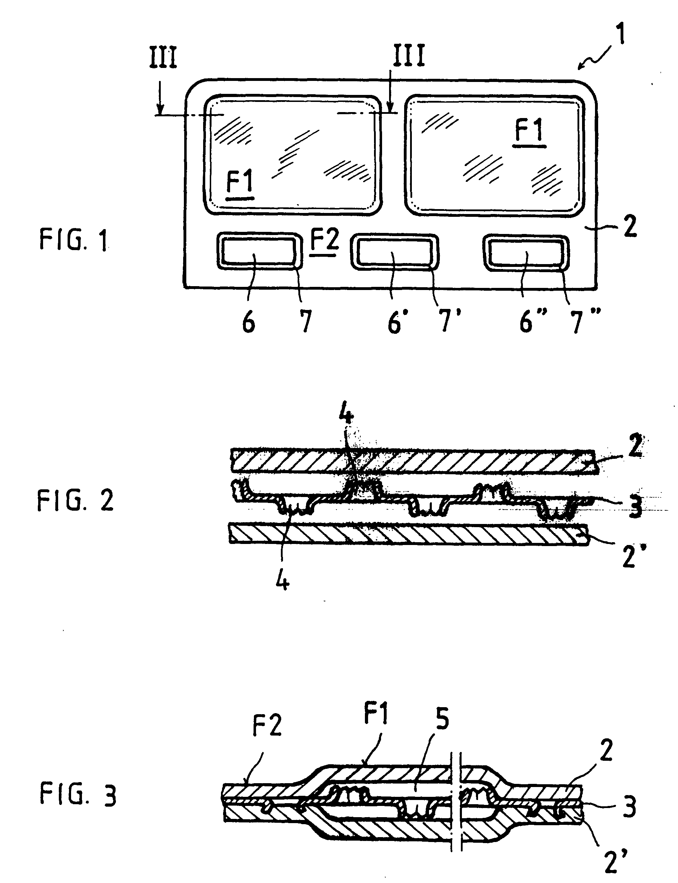

Das in der Figur 1 dargestellte Hitzeschild (1) besteht wie in der Figur 2 zu erkennen, aus zwei metallischen Grundplatten (2,2') und einem zwischenliegenden Zackenblech (3). Die Grundplatten (2,2') bestehen aus Aluminium und das Zackenblech (3) aus Stahl.

Wie in der Figur 3 dargestellt, werden mit Hilfe eines geeigneten Preßwerkzeuges (nicht dargestellt) die Grundplatten (2,2') derart auf das Zackenblech gepreßt, daß Flächen F1 und F2 gebildet werden.

Die Zacken (4) des Zackenblechs (3) sind unterschiedlich tief in die Grundplatten (2,2') eingepreßt. Im Bereich der Fläche (F2) fungieren die Zacken (4) als Verbindungselement. Im Bereich der Fläche (F1) fungieren die Zacken (4) als Abstandhalter der Grundplatten (2,2').

Der Spalt zwischen den Grundplatten (2,2') im Bereich der Fläche (F1) definiert einen Hohlraum (5), der mit Luft gefüllt ist. Es können auf diese Weise mehrere Hohlräume (5) gebildet werden.

Wie in der Figur 1 dargestellt, weist das Hitzeschild (1) lediglich zwei erhobene Flächen (F1) auf, die jeweils einen Hohlraum (5) definieren. Darüber hinaus können im Hitzeschild (1) Öffnungen (6,6',6") für Abgasrohre angeordnet sein. Zusätzlich können sich separate Dichtmaterialien (7,7',7") um die Randbereiche der Öffnungen (6,6',6") erstrecken.

Die Topographie der Flächen (F1) kann beliebig, und zwar abgestimmt auf den Anwendungsfall, ausgebildet sein. Es können beispielsweise mehrere kleine Flächen (F1) oder eine große Fläche angeordnet sein. Auch die Kontur der Flächenränder ist beliebig wählbar. Es können runde oder eckige Flächen ausgebildet sein.

## Patentansprüche

1. Hitzeschild zur Abschirmung von thermisch empfindlichen Bauteilen, insbesondere bei Kraftfahrzeugen, bestehend aus zwei metallischen Grundplatten (2,2'), die am Randbereich miteinander verbunden sind und die außerhalb des Randbereiches zwischen ihren einander zugewandten Oberflächen einen definierten Spalt aufweisen, dadurch gekennzeichnet, daß zwischen den Grundplatten (2,2') ein Zackenblech (3) angeordnet ist, dessen Zacken (4) lokal unterschiedlich tief in die Oberflächen der Grundplatten (2,2') eingepreßt sind, derart, daß Flächen (F2, F1) mit großer und kleiner Einpreßtiefe gebildet sind, wodurch im Bereich großer Einpreßtiefe die Zacken (4) als Verbindungselement der Grundplatten (2,2') und im Bereich kleiner Einpreßtiefe die Zacken (4) als Abstandhalter des Spaltes der Grundplatten (2,2') fungieren.

2. Hitzeschild nach Anspruch 1, dadurch gekennzeichnet, daß die Grundplatten (2,2') aus Aluminium bestehen.

3. Hitzeschild nach den Ansprüchen 1 und 2, dadurch gekennzeichnet, daß die Dicke der Grundplatten (2,2') im Bereich von 0,2-1,0 mm liegt.

4. Hitzeschild nach den Ansprüchen 1 bis 3, dadurch gekennzeichnet, daß die Flächen (F2) mit großer Einpreßtiefe am Randbereich des Hitzeschildes (1) angeordnet sind.

5. Hitzeschild nach den Ansprüchen 1 bis 4, dadurch gekennzeichnet, daß die Flächen (F1) mit kleiner Einpreßtiefe vollkommen von Flächen (F2) mit großer Einpreßtiefe umschlossen sind, so daß Hohlräume (5) gebildet sind.

6. Hitzeschild nach mindestens einem der Ansprüche 1 bis 5, dadurch gekennzeichnet, daß das Hitzeschild (1) am Randbereich Öffnungen (6,6',6") aufweist, die mit Dichtmaterialien (7,7',7") zur Abdichtung von Abgasrohren versehen sind.

## Claims

1. A heat shield for shielding heat-sensitive components, especially in motor vehicles, consisting of two metal base plates (2, 2') which are connected together at the edge region and have a defined gap between their mutually facing surfaces outside the edge region, characterized in that a toothed sheet (3) is arranged between the base plates (2, 2'), its teeth (4) being pressed locally into the surfaces of the base plates (2, 2') to different depths, in such a manner that areas (F2, F1) with greater and smaller depths of pressing in are formed, whereby the teeth (4) function in the region of greater depth of pressing in as connecting elements of the base plates (2, 2') and as spacers for the gap of the base plates (2, 2') in the region of smaller depth of pressing in.

2. A heat shield according to claim 1, characterized in that the base plates (2, 2') consist of aluminium.

3. A heat shield according to claims 1 and 2, characterized in that the thickness of the base plates (2, 2') lies in the range of 0.2 to 1.0 mm.

4. A heat shield according to claims 1 to 3, characterized in that the areas (F2) with the greater depth of pressing in are arranged at the edge region of the heat shield (1).

5. A heat shield according to claims 1 to 4, characterized in that the areas (F1) with the smaller depth of pressing in are encircled, so that hollow spaces (5) are formed.

6. A heat shield according to at least one of claims 1 to 5, characterized in that the heat shield (1) has openings (6, 6', 6") at the edge region, which are provided with sealing materials (7, 7', 7") for sealing exhaust gas pipes.

## Revendications

1. Ecran thermique pour protéger des pièces sensibles à la chaleur, en particulier dans des véhicules automobiles, comprenant deux plaques de base métalliques (2; 2'), qui sont reliées l'une à l'autre sur leurs périphéries et qui présentent en dehors de leur périphérie entre leurs parois se faisant face une fente définie, caractérisé en ce qu'entre les plaques de base (2, 2') est disposée une tôle dentelée (3), dont les dents (4) sont imprimées dans la surface supérieure des plaques de base (2, 2') avec des profondeurs locales différentes de telle sorte que des surfaces (F2, F1) avec des profondeurs d'empreinte plus au moins grande sont formées, les dents (4) servant d'éléments de liaison pour les plaques de base (2, 2') dans la zone des grandes profondeurs d'empreinte et servant d'espaceurs de fentes des plaques de base (2, 2') dans la zone des petites profondeurs d'empreinte.

2. Ecran thermique selon la revendication 1, caractérisé en ce que les plaques de base (2, 2') sont réalisées en aluminium.

3. Ecran thermique selon les revendications 1 et 2, caractérisé en ce que l'épaisseur des plaques de base (2, 2') se situe dans le domaine de 0,2-1,0 mm.

4. Ecran thermique selon les revendications 1 à 3, caractérisé en ce que les surfaces (F2) avec les grandes profondeurs d'empreinte sont disposées sur la périphérie de l'écran thermique (1).

5. Ecran thermique selon les revendications 1 à 4, caractérisé cn ce que les surfaces (F1) avec les petites profondeurs d'empreinte sont entièrement entourées par les surfaces (F2) avec les grandes profondeurs d'empreinte, de sorte que des espaces creux (5) sont formés.

6. Ecran thermique selon au moins une des revendications 1 à 5, caractérisé en ce que l'écran thermique (1) présente des ouvertures (6, 6', 6") sur la périphérie, qui sont pourvues de matériaux d'étanchéité (7, 7', 7") pour l'étanchéité de tuyaux d'échappement
